# EUROPEAN PATENT APPLICATION

(11) **EP 4 412 266 A1**
(43) Date of publication of application: **07.08.2024**
(21) Application number: 22875810.8
(22) Date of filing: 13.09.2022
(51) Int. Cl.: H04W 8/02, H04W 64/00, H04W 72/04

(54) **DEVICE AND METHOD**

(30) Priority: 30.09.2021 JP 2021162064
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: YAMAMOTO, Tomoyuki, Kariya- city, Aichi 4488661 (JP); TAKAHASHI, Hideaki, Kariya- city, Aichi 4488661 (JP)
(74) Representative: TBK
(86) International application number: PCT/JP2022/034194
(87) International publication number: WO 2023/053938

(57) **Abstract**

An apparatus (100) according to an aspect of the present disclosure includes: a communication processing unit (135) configured to receive, from a network (200, 300), a message including time information associated with permission to transmit provided information that is used for configuring a tracking area, TA, list for the apparatus; and an information obtaining unit (131) configured to obtain the time information included in the message. The provided information is associated with a moving path of the apparatus.

## Description

### CROSS-REFERENCE TO RELATED APPLICATIONS

This application is based on Japanese Patent Application No. 2021-162064, filed on September 30, 2021, the content of which is incorporated herein.

### Technical Field

The present disclosure relates to an apparatus and a method.

### Background Art

In 3rd Generation Partnership Project (3GPP) (registered trademark) Release 15, as a work item for long term evolution (LTE), some features for unmanned aerial vehicles (UAVs) as user equipments (UEs) have been discussed and specified (NPL 1).

One of the specified features is a Flight Path feature. With the Flight Path feature, a flight path of a UAV is reported from the UAV to a network in response to a request from the network. This is intended to serve for control such as a handover or beamforming based on a moving plan of the UAV on the network side (NPL 2).

Although the Flight Path feature has not yet been defined for new radio (NR), the utilization of the Flight Path feature has been mentioned in proposals of work items for Release 18 (NPLs 3 to 5).

In addition, the TSs define a tracking area (TA) that is managed as information indicating the location of a UE. The TA includes one or more cells. The UE receives, from a network, a TA list indicating the one or more TAs configured for the UE. Specifically, the UE receives a RegistrationAccept message including the TA list from the network by transmitting a RegistrationRequest message to the network. In a case where the UE is located within a cell corresponding to a TA indicated by the received TA list, the UE does not perform a tracking area update (TAU) procedure that is a procedure of updating location information. However, in a case where the UE is located within a cell corresponding to a TA other than the TA indicated by the received TA list, the UE performs a TAU procedure for the network.

### Citation List

### Non Patent Literature

NPL 1: 3GPP TS 36.331 V15.14.0 (2021-06), "3rd Generation Partnership Project; Technical Specification Group Radio Access Network; Evolved Universal Terrestrial Radio Access (E-UTRA); Radio Resource Control (RRC); protocol specification (Release 15)"
NPL 2: 3GPP TSG-RAN WG2 Meeting #101bis Sanya, China, 16 - 20 Apr 2018, R2-1805125, Huawei, HiSilicon, CMCC, Fraunhofer, Nokia, Nokia Shanghai Bell, Lenovo, Motorola Mobility, InterDigital, KDDI, "Discussion on flight path information"
NPL 3: 3GPP TSG RAN - RAN-Rel-18 workshop, Online, 2021-06-28 - 2021-07-02, RWS-210190, Ericsson, "Motivation for Rel-18 UAV"
NPL 4: 3GPP TSG RAN Rel-18 workshop, Electronic Meeting, June 28 - July 2, 2021, RWS-210254, Lenovo, Motorola Mobility, "Discussion on UAV Swarm Support in NR RAN for Rel-18"
NPL 5: 3GPP TSG RAN Rel-18 workshop, Electronic Meeting, June 28- July 2, 2021, RWS-210474, ZTE, Sanechips, "Support of UAV for 5G Advanced"

### Summary of the Invention

A detailed study by the inventors has revealed the following issue. That is, the conventional technology may lead to an increase in the signaling for updating or configuring a TA list. For example, in a case where a TA list configured for a UE is not suitable for a moving path of the UE, the UE may move more easily to a place other than a TA indicated by the TA list. In this case, the TAU is invoked with high frequency, which may increase signaling.

An object of the present disclosure is to provide an apparatus and a method that each make it possible to suppress an increase in the signaling for updating or configuring a TA list.

An apparatus (100) according to an aspect of the present disclosure includes: a communication processing unit (135) configured to receive, from a network (200, 300), a message including time information associated with permission to transmit provided information that is used for configuring a tracking area, TA, list for the apparatus; and an information obtaining unit (131) configured to obtain the time information included in the message. The provided information is associated with a moving path of the apparatus.

An apparatus (300) according to an aspect of the present disclosure includes: an information obtaining unit (331) configured to obtain time information associated with permission to transmit provided information that is used for configuring a tracking area, TA, list for a communication apparatus (100); and a communication processing unit (335) configured to transmit, to the communication apparatus, a message including the time information. The provided information is associated with a moving path of the communication apparatus.

A method performed by an apparatus (100) according to an aspect of the present disclosure includes: receiving, from a network (200, 300), a message including time information associated with permission to transmit provided information that is used for configuring a tracking area, TA, list for the apparatus; and obtaining the time information included in the message. The provided information is associated with a moving path of the apparatus.

A method performed by an apparatus (300) according to an aspect of the present disclosure includes: obtaining time information associated with permission to transmit provided information that is used for configuring a tracking area, TA, list for a communication apparatus (100); and transmitting, to the communication apparatus, a message including the time information. The provided information is associated with a moving path of the communication apparatus.

According to the present disclosure, it is possible to suppress an increase in the signaling for updating or configuring a TA list. Note that, instead of or in addition to this advantageous effect, the present disclosure may yield another advantageous effect.

### Brief Description of Drawings

FIG. 1 is an explanatory diagram illustrating an example of a schematic configuration of a system according to embodiments of the present disclosure.
FIG. 2 is an explanatory diagram for explaining an example of communication control based on a moving path of a user equipment according to embodiments of the present disclosure.
FIG. 3 is a block diagram illustrating an example of a schematic functional configuration of the user equipment according to embodiments of the present disclosure.
FIG. 4 is a block diagram illustrating an example of a schematic hardware configuration of the user equipment according to embodiments of the present disclosure.
FIG. 5 is a block diagram illustrating an example of a schematic functional configuration of a base station according to embodiments of the present disclosure.
FIG. 6 is a block diagram illustrating an example of a schematic hardware configuration of the base station according to embodiments of the present disclosure.
FIG. 7 is a block diagram illustrating an example of a schematic functional configuration of a network node according to embodiments of the present disclosure.
FIG. 8 is a block diagram illustrating an example of a schematic hardware configuration of the network node according to embodiments of the present disclosure.
FIG. 9 is a sequence diagram for explaining an example of a schematic flow of processing according to a first embodiment of the present disclosure.
FIG. 10 is an explanatory diagram for explaining an example of conventional TA list configuration.
FIG. 11 is an explanatory diagram for explaining an example of TA list configuration according to the first embodiment of the present disclosure.
FIG. 12 is a sequence diagram for explaining an example of a schematic flow of processing according to a modification example of the first embodiment of the present disclosure.
FIG. 13 is a sequence diagram for explaining another example of the schematic flow of the processing according to the modification example of the first embodiment of the present disclosure.
FIG. 14 is a sequence diagram for explaining an example of a schematic flow of processing according to a second embodiment of the present disclosure.
FIG. 15 is a sequence diagram for explaining an example of a schematic flow of processing according to a modification example of the second embodiment of the present disclosure.
FIG. 16 is an explanatory diagram for explaining an example of time information according to a third embodiment of the present disclosure.
FIG. 17 is an explanatory diagram for explaining another example of the time information according to the third embodiment of the present disclosure.
FIG. 18 is a sequence diagram for explaining an example of a schematic flow of processing according to the third embodiment of the present disclosure.
FIG. 19 is an explanatory diagram for explaining an example of time information according to a first modification example of the third embodiment of the present disclosure.

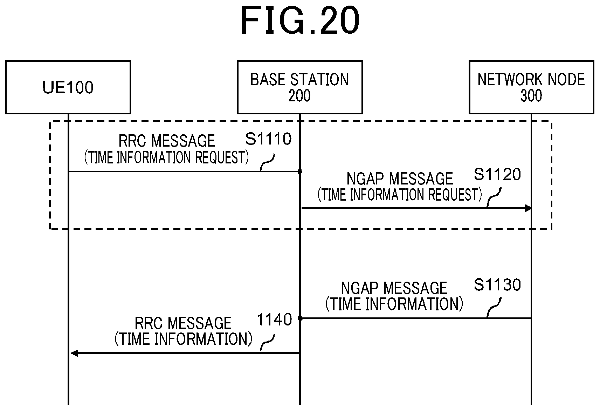

FIG. 20 is a sequence diagram for explaining an example of a schematic flow of processing according to a second modification example of the third embodiment of the present disclosure.

### Description of Embodiments

Hereinafter, embodiments of the present disclosure will be described in detail with reference to the appended drawings. In the present specification and the drawings, elements to which similar descriptions are applicable are denoted with the same reference signs, thereby omitting duplicate descriptions.

Descriptions will be given in the following order:
1. Configuration of System
2. Configuration of User Equipment
3. Configuration of Base Station
4. Configuration of Network Node
5. Configuration of Processing Node
6. First Embodiment (Provision of Path Information)
7. Second Embodiment (Provision of TA List)
8. Third Embodiment (Transmission Timer of Provided Information)

### <1. Configuration of System>

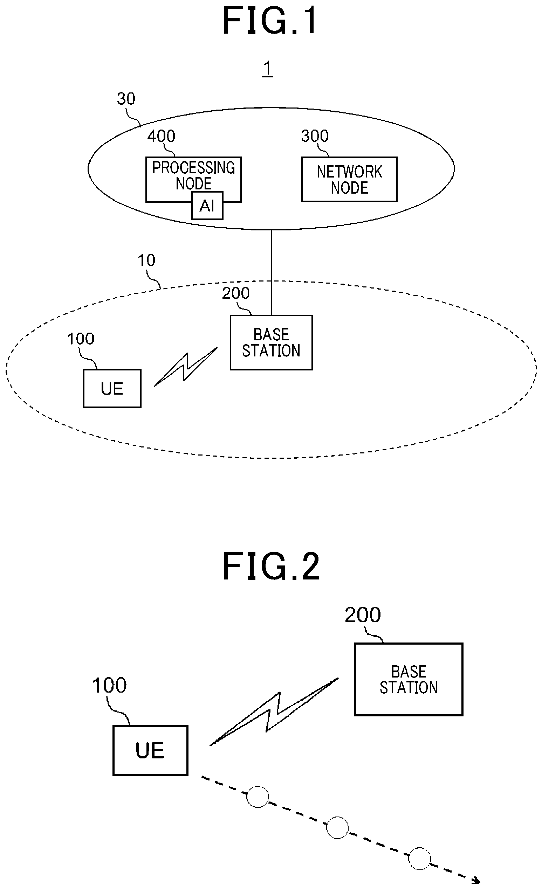

An example of a configuration of a system 1 according to embodiments of the present disclosure will be described with reference to FIG. 1. Referring to FIG. 1, the system 1 includes a user equipment (communication apparatus) 100, a base station 200, and a core network 30. The core network 30 includes a network node 300 and a processing node 400.

For example, the system 1 is a system compliant with technical specifications (TSs) in 3GPP. More specifically, for example, the system 1 is a system compliant with the TSs of 5G or new radio (NR). Naturally, the system 1 is not limited to this example. The system 1 may be a system compliant with other TSs in 3GPP. As an example, the system 1 may be a system compliant with the TSs of LTE, LTE advanced (LTE-A), or 4G and the base station 200 may be an evolved node B (eNB). Alternatively, the base station 200 may be an ng-eNB. As another example, the system 1 may be a system compliant with the TSs of 3G and the base station 200 may be a Node B. As yet another example, the system 1 may be a system compliant with next generation (for example, 6G) TSs. Alternatively, the system 1 may be a system compliant with TSs of another standards organization for mobile communications.

### (1) UE 100

The UE 100 communicates with a base station. For example, the UE 100 communicates with the base station 200 in a case where the UE 100 is located within a coverage area 10 of the base station 200.

For example, the UE 100 communicates with a base station (for example, base station 200) by using a radio access network (RAN) protocol stack. For example, the protocol stack includes protocols of radio resource control (RRC), service data adaptation protocol (SDAP), packet data convergence protocol (PDCP), radio link control (RLC), medium access control (MAC), and physical (PHY) layers. Alternatively, the protocol stack does not have to include all of these protocols, but may include some of these protocols.

In addition, the UE 100 communicates with a network node (for example, network node 300) by using a non-access stratum (NAS) protocol. For example, the UE 100 transmits a NAS message to the base station 200. The NAS message is transmitted from the base station 200 to the network node 300.

In particular, the UE 100 is mounted on a mobile body. For example, the mobile body may be an aircraft such as a UAV or a vehicle such as an autonomous driving car or a manual driving car with a navigation function. In the mobile body, a moving path may be set in advance. It is possible for the UE 100 to receive benefits of communication control based on the moving path by reporting the moving path to the network (that is, base station 200). A report of the moving path may be supported by, for example, a Flight Path mechanism or another moving path reporting mechanism.

Referring to the example of FIG. 2, for example, the UE 100 reports the set moving path to the base station 200. The base station 200 preliminarily performs, for example, processing for a handover or beamforming based on a future location of the UE 100 that is estimated from the reported moving path. This allows communication control suitable for the estimated location to be performed at a timing at which the UE 100 reaches the location.

In addition, the UE 100 is configured with a TA list for location management. For example, the TA list is a tracking area identity (TAI) list. The TA list is configured by the network node 300. The UE 100 receives the configured TA list from the network node 300. In a case where the UE 100 is located within a TA indicated by the TA list, the UE 100 does not perform a TAU procedure (referred to as a TAU below). However, in a case where the UE 100 moves to a TA other than the TA indicated by the TA list, the UE 100 performs a TAU for the network node 300. The TA list is updated through the TAU and the UE 100 receives the updated TA list from the network node 300.

### (2) Base Station 200

The base station 200 is a node in an RAN and communicates with a UE (for example, UE 100) located within the coverage area 10 of the base station 200.

For example, the base station 200 communicates with a UE (for example, UE 100) by using the protocol stack.

In addition, the base station 200 communicates with nodes (for example, the network node 300 and the processing node 400) located within the core network 30.

For example, the base station 200 communicates with nodes (for example, the network node 300 and the processing node 400) located within the core network 30 by using an NG application protocol (NGAP).

For example, the base station 200 is a gNB. The gNB is a node that provides NR user plane and control plane protocol terminations towards a UE and is connected to a 5G core network (5GC) through an NG interface. Alternatively, the base station 200 may be an en-gNB. The en-gNB is a node that provides NR user plane and control plane protocol terminations toward a UE and operates as a secondary node in E-UTRA-NR dual connectivity (EN-DC).

The base station 200 may include a plurality of nodes. The plurality of nodes may include a first node that hosts higher layers included in the protocol stack and a second node that hosts lower layers included in the protocol stack. The higher layers may include the RRC layer, the SDAP layer, and the PDCP layer, while the lower layers may include the RLC layer, the MAC layer, and the PHY layer. The first node may be a central unit (CU) and the second node may be a distributed unit (DU). Note that the plurality of nodes may include a third node that performs lower-level processing of the PHY layer and the second node may perform higher-level processing of the PHY layer. The third node may be a radio unit (RU).

Alternatively, the base station 200 may be one of the plurality of nodes and may be connected to another unit of the plurality of nodes.

The base station 200 may be an integrated access and backhaul (IAB) donor or an IAB node.

### (3) Network Node 300

The network node 300 is a network function of the core network 30. For example, the network node 300 is an access and mobility management function (AMF).

The network node 300 communicates with a UE (for example, UE 100) through a base station (for example, base station 200). For example, the network node 300 communicates with the base station 200 by using an NGAP. In addition, the network node 300 communicates with the UE 100 by using a NAS protocol.

The network node 300 configures a TAlist. Specifically, the network node 300 configures a TA list including one or more TAs based on the cell within which the UE 100 is located in response to a request from the UE 100. The network node 300 transmits the configured TA list to the UE 100. In addition, the network node 300 updates the TA list and transmits the updated TA list to the UE 100 in a TAU.

### (4) Processing Node 400

The processing node 400 is a network function of performing processing by using artificial intelligence (AI). In addition, the AI may be trained through machine learning (ML). 3GPP Release 18 has been discussing the use of AI or ML in a communication system (see, for example, TR 22.874). The processing node 400 may be a form of the use of the AI or the ML. For example, the processing node 400 may be implemented in the form of a server, but the form for implementing the processing node 400 is not limited to this.

For example, the processing node 400 is disposed in the core network 30 as illustrated in FIG. 1. Note that the processing node 400 may be disposed in a network other than the core network. For example, the processing node 400 may be disposed in an external network such as the Internet, or a radio access network.

The processing node 400 communicates with a UE (for example, UE 100), a base station (for example, base station 200), and a network node (for example, network node 300). A communication method corresponding to the disposition of the processing node 400 may be used for the communication of the processing node 400. For example, in a case where the processing node 400 is disposed in the core network, the processing node 400 may communicate with the base station 200 by using an NGAP. In that case, the processing node 400 may communicate with the UE 100 by using a NAS protocol. Note that a protocol defined for the communication of the processing node 400 may be used instead of or along with any of the existing protocols.

### <2. Configuration of User Equipment>

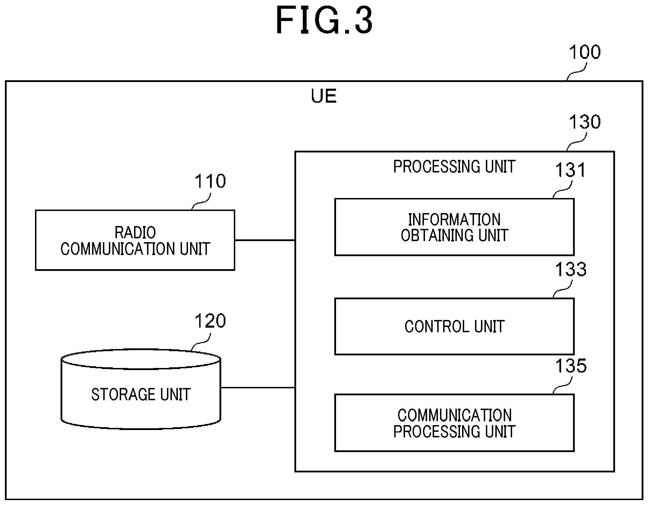

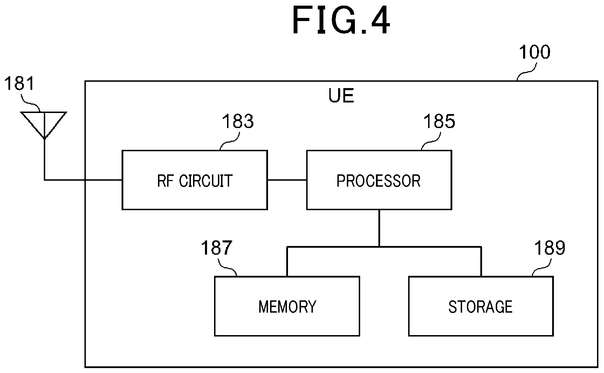

An example of a configuration of the UE 100 according to embodiments of the present disclosure will be described with reference to FIGS. 3 and 4.

### (1) Functional Configuration

First, an example of a functional configuration of the UE 100 according to embodiments of the present disclosure will be described with reference to FIG. 3. Referring to FIG. 3, the UE 100 includes a radio communication unit 110, a storage unit 120, and a processing unit 130.

The radio communication unit 110 wirelessly transmits and receives signals. For example, the radio communication unit 110 receives a signal from a base station and transmits a signal to the base station. For example, the radio communication unit 110 receives a signal from another UE and transmits a signal to the other UE.

The storage unit 120 stores various kinds of information for the UE 100.

The processing unit 130 provides various functions of the UE 100. The processing unit 130 includes an information obtaining unit 131, a control unit 133, and a communication processing unit 135. Note that the processing unit 130 may further include other components in addition to these components. That is, the processing unit 130 may also perform an operation other than operations of these components. Specific operations of the information obtaining unit 131, the control unit 133, and the communication processing unit 135 will be described in detail below.

For example, the processing unit 130 (communication processing unit 135) communicates with a base station (for example, base station 200) or another UE through the radio communication unit 110. In addition, the processing unit 130 (communication processing unit 135) communicates with a core network (for example, network node 300) through the base station.

### (2) Hardware Configuration

Next, an example of a hardware configuration of the UE 100 according to embodiments of the present disclosure will be described with reference to FIG. 4. Referring to FIG. 4, the UE 100 includes an antenna 181, a radio frequency (RF) circuit 183, a processor 185, a memory 187, and a storage 189.

The antenna 181 converts signals into radio waves and emits the radio waves into the air. In addition, the antenna 181 receives radio waves in the air and converts the radio waves into signals. The antenna 181 may include a transmitting antenna and a receiving antenna or may be a single antenna for transmission and reception. The antenna 181 may be a directional antenna and may include a plurality of antenna elements.

The RF circuit 183 performs analog processing on signals that are transmitted and received through the antenna 181. The RF circuit 183 may include a high-frequency filter, an amplifier, a modulator, a lowpass filter, and the like.

The processor 185 performs digital processing on signals that are transmitted and received through the antenna 181 and the RF circuit 183. The digital processing includes processing of the RAN protocol stack. The processor 185 may include a plurality of processors or may be a single processor. The plurality of processors may include a baseband processor that performs the digital processing and one or more processors that perform other processing.

The memory 187 stores a program to be performed by the processor 185, a parameter associated with the program, and other various kinds of information. The memory 187 may include at least one of a read only memory (ROM), an erasable programmable read only memory (EPROM), an electrically erasable programmable read only memory (EEPROM), a random-access memory (RAM), and a flash memory. All or part of the memory 187 may be included in the processor 185.

The storage 189 stores various kinds of information. The storage 189 may include at least one of a solid-state drive (SSD) and a hard disc drive (HDD).

The radio communication unit 110 may be implemented by the antenna 181 and the RF circuit 183. The storage unit 120 may be implemented by the storage 189. The processing unit 130 may be implemented by the processor 185 and the memory 187.

The processing unit 130 may be implemented by a system on a chip (SoC) including the processor 185 and the memory 187. The SoC may include the RF circuit 183 and the radio communication unit 110 may also be implemented by the SoC.

Given the hardware configuration described above, the UE 100 may include a memory (that is, memory 187) that stores a program and one or more processors (that is, processor 185) capable of executing the program and the one or more processors may perform operations of the processing unit 130 by executing the program. The program may be a program for causing the processors to perform the operations of the processing unit 130.

### <3. Configuration of Base Station>

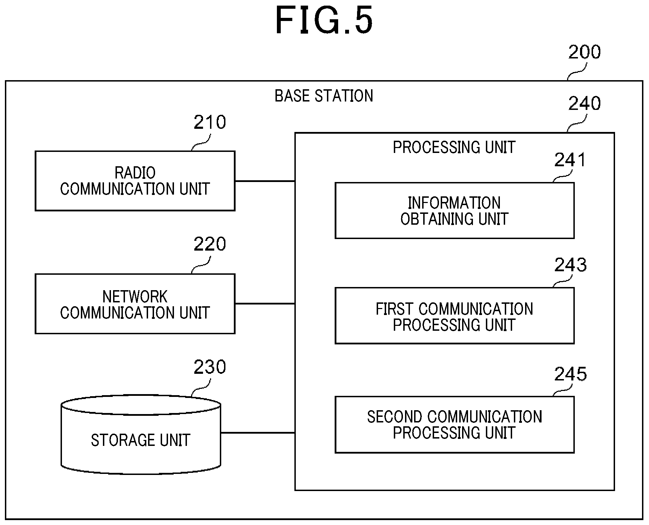

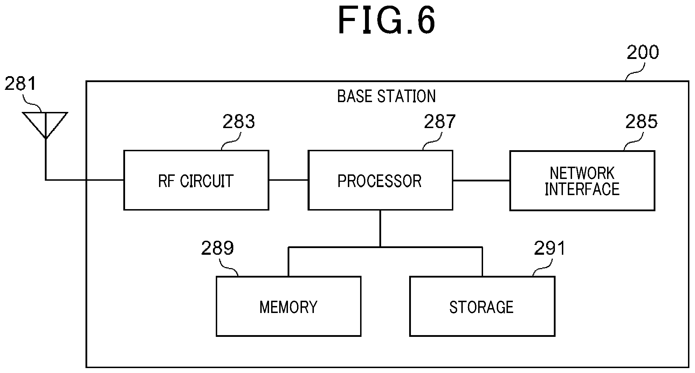

An example of a configuration of the base station 200 according to embodiments of the present disclosure will be described with reference to FIGS. 5 and 6.

### (1) Functional Configuration

First, an example of a functional configuration of the base station 200 according to embodiments of the present disclosure will be described with reference to FIG. 5. Referring to FIG. 5, the base station 200 includes a radio communication unit 210, a network communication unit 220, a storage unit 230, and a processing unit 240.

The radio communication unit 210 wirelessly transmits and receives signals. For example, the radio communication unit 210 receives a signal from a UE and transmits a signal to the UE.

The network communication unit 220 receives a signal from a network and transmits a signal to the network.

The storage unit 230 stores various kinds of information for the base station 200.

The processing unit 240 provides various functions of the base station 200. The processing unit 240 includes an information obtaining unit 241, a first communication processing unit 243, and a second communication processing unit 245. Note that the processing unit 240 may further include other components in addition to these components. That is, the processing unit 240 may also perform an operation other than operations of these components. Specific operations of the information obtaining unit 241, the first communication processing unit 243, and the second communication processing unit 245 will be described in detail below.

For example, the processing unit 240 (first communication processing unit 243) communicates with a UE (for example, UE 100) through the radio communication unit 210. For example, the processing unit 240 (second communication processing unit 245) communicates with another node (for example, the network node 300 or the processing node 400 within the core network 30, or another base station) through the network communication unit 220.

### (2) Hardware Configuration

Next, an example of a hardware configuration of the base station 200 according to embodiments of the present disclosure will be described with reference to FIG. 6. Referring to FIG. 6, the base station 200 includes an antenna 281, an RF circuit 283, a network interface 285, a processor 287, a memory 289, and a storage 291.

The antenna 281 converts signals into radio waves and emits the radio waves into the air. In addition, the antenna 281 receives radio waves in the air and converts the radio waves into signals. The antenna 281 may include a transmitting antenna and a receiving antenna or may be a single antenna for transmission and reception. The antenna 281 may be a directional antenna and may include a plurality of antenna elements.

The RF circuit 283 performs analog processing on signals that are transmitted and received through the antenna 281. The RF circuit 283 may include a high-frequency filter, an amplifier, a modulator, a lowpass filter, and the like.

The network interface 285 is, for example, a network adaptor, and transmits a signal to a network and receives a signal from the network.

The processor 287 performs digital processing on signals that are transmitted and received through the antenna 281 and the RF circuit 283. The digital processing includes processing of the RAN protocol stack. The processor 287 also performs processing on signals that are transmitted and received through the network interface 285. The processor 287 may include a plurality of processors or may be a single processor. The plurality of processors may include a baseband processor that performs the digital processing and one or more processors that perform other processing.

The memory 289 stores a program to be performed by the processor 287, a parameter associated with the program, and other various kinds of information. The memory 289 may include at least one of a ROM, an EPROM, an EEPROM, a RAM, and a flash memory. All or part of the memory 289 may be included in the processor 287.

The storage 291 stores various kinds of information. The storage 291 may include at least one of an SSD and an HDD.

The radio communication unit 210 may be implemented by the antenna 281 and the RF circuit 283. The network communication unit 220 may be implemented by the network interface 285. The storage unit 230 may be implemented by the storage 291. The processing unit 240 may be implemented by the processor 287 and the memory 289.

Part or all of the processing unit 240 may be virtualized. In other words, part or all of the processing unit 240 may be implemented as a virtual machine. In this case, part or all of the processing unit 240 may operate as a virtual machine on a physical machine (that is, hardware) including a processor, a memory, and the like and a hypervisor.

Given the hardware configuration described above, the base station 200 may include a memory (that is, memory 289) that stores a program and one or more processors (that is, processor 287) capable of executing the program and the one or more processors may perform operations of the processing unit 240 by executing the program. The program may be a program for causing the processors to perform the operations of the processing unit 240.

### <4. Configuration of Network Node>

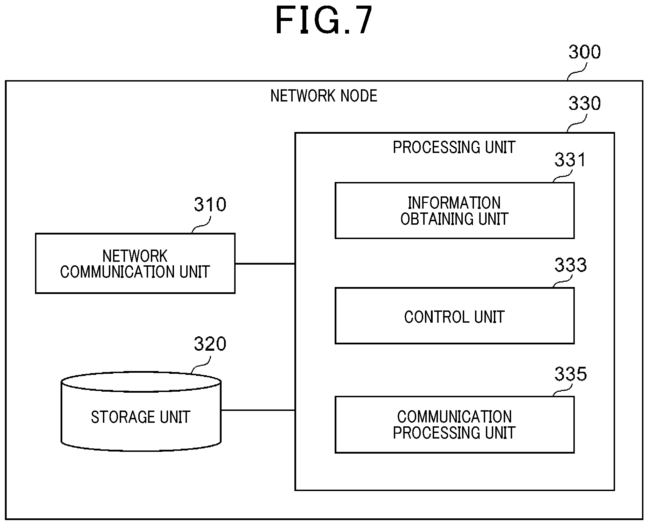

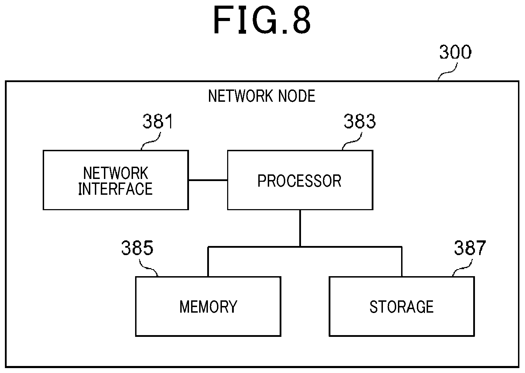

An example of a configuration of the network node 300 according to embodiments of the present disclosure will be described with reference to FIGS. 7 and 8.

### (1) Functional Configuration

First, an example of a functional configuration of the network node 300 according to embodiments of the present disclosure will be described with reference to FIG. 7. Referring to FIG. 7, the network node 300 includes a network communication unit 310, a storage unit 320, and a processing unit 330.

The network communication unit 310 receives a signal from a network and transmits a signal to the network.

The storage unit 320 stores various kinds of information for the network node 300.

The processing unit 330 provides various functions of the network node 300. The processing unit 330 includes an information obtaining unit 331, a control unit 333, and a communication processing unit 335. Note that the processing unit 330 may further include other components in addition to these components. That is, the processing unit 330 may also perform an operation other than operations of these components. Specific operations of the information obtaining unit 331, the control unit 333, and the communication processing unit 335 will be described in detail below.

For example, the processing unit 330 (communication processing unit 335) communicates with a base station (for example, base station 200) through the network communication unit 310. For example, the processing unit 330 (communication processing unit 335) communicates with a UE (for example, UE 100) via a base station (for example, base station 200) through the network communication unit 310.

### (2) Hardware Configuration

Next, an example of a hardware configuration of the network node 300 according to embodiments of the present disclosure will be described with reference to FIG. 8. Referring to FIG. 8, the network node 300 includes a network interface 381, a processor 383, a memory 385, and a storage 387.

The network interface 381 is, for example, a network adaptor, and transmits a signal to a network and receives a signal from the network.

The processor 383 performs processing on signals that are transmitted and received through the network interface 381. The processor 383 may include a plurality of processors or may be a single processor.

The memory 385 stores a program to be performed by the processor 383, a parameter associated with the program, and other various kinds of information. The memory 385 may include at least one of a ROM, an EPROM, an EEPROM, a RAM, and a flash memory. All or part of the memory 385 may be included in the processor 383.

The storage 387 stores various kinds of information. The storage 387 may include at least one of an SSD and an HDD.

The network communication unit 310 may be implemented by the network interface 381. The storage unit 320 may be implemented by the storage 387. The processing unit 330 may be implemented by the processor 383 and the memory 385

Part or all of the processing unit 330 may be virtualized. In other words, part or all of the processing unit 330 may be implemented as a virtual machine. In this case, part or all of the processing unit 330 may operate as a virtual machine on a physical machine (that is, hardware) including a processor, a memory, and the like and a hypervisor.

Given the hardware configuration described above, the network node 300 may include a memory (that is, memory 385) that stores a program and one or more processors (that is, processor 383) capable of executing the program and the one or more processors may perform operations of the processing unit 330 by executing the program. The program may be a program for causing the processors to perform the operations of the processing unit 330.

### <5. Configuration of Processing Node>

An example of a configuration of the processing node 400 according to embodiments of the present disclosure will be described. Note that the functional configuration and the hardware configuration of the processing node 400 are each substantially the same as the configuration of the network node 300 having the same name and will not be thus illustrated or described in detail.

### (1) Functional Configuration

First, an example of a functional configuration of the processing node 400 according to embodiments of the present disclosure will be described. The processing node 400 includes a network communication unit 410, a storage unit 420, and a processing unit 430. The processing unit 430 includes an information obtaining unit 431, a control unit 433, and a communication processing unit 435.

### (2) Hardware Configuration

Next, an example of a hardware configuration of the processing node 400 according to embodiments of the present disclosure will be described. The processing node 400 includes a network interface 481, a processor 483, a memory 485, and a storage 487.

### <6. First Embodiment>

A first embodiment of the present disclosure will be described. In the first embodiment, path information is transmitted from the UE 100 to the network node 300 via the base station 200 as provided information. In addition, the path information is provided from the network node 300 to the processing node 400 and the path information is converted to a TA list by the processing node 400.

### <6-1. Operation Examples>

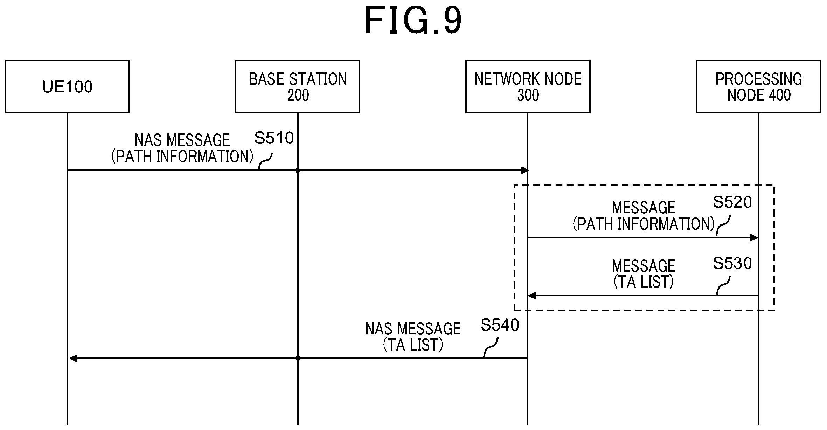

Examples of operations of the UE 100, the base station 200, the network node 300, and the processing node 400 according to the first embodiment of the present disclosure, and pieces of relevant information will be described with reference to FIG. 9.

### (1) Operation of UE 100

The UE 100 transmits path information to the network node 300. The UE 100 receives a TA list from the network node 300 as a response to the path information. The following describes an operation of the UE 100 and relevant information in detail.

### (1-1) Obtainment of Path Information

The UE 100 obtains provided information associated with a moving path of the UE 100. The provided information is information that is used for configuring a TA list for the UE 100. For example, the provided information is path information indicating at least the moving path of the UE 100.

Specifically, the UE 100 (information obtaining unit 131) obtains the path information. For example, the UE 100 obtains the path information from an application. In other words, the NAS layer of the UE 100 obtains the path information from a higher layer (for example, application layer) of the NAS layer. For example, the moving path is a scheduled (that is, planned) moving path. In addition, the application may be a navigation application.

For example, the path information may be flightPathInfoReport or information corresponding to this.

### (1-2) Transmission of Path Information

The UE 100 transmits obtained path information to a network. Specifically, the UE 100 (communication processing unit 135) transmits a message including path information serving as provided information to the network.

Specifically, the network that is the transmission destination of the message is the network node 300 within the core network 30. For example, the UE 100 transmits a NAS message including the path information to the AMF that is the network node 300. The NAS message is transmitted to the network node 300 via the base station 200.

Such use of signaling between the UE and the network node allows the path information to be transmitted from the UE 100 to the network node 300 without modifying the operation of a lower layer.

For example, the NAS message including the path information may be a RegistrationRequest message or a ServiceRequest message.

This makes it possible to transmit, to the network node 300 that configures a TA list, path information serving as provided information that is used for configuring the TA list by using the existing signaling between the UE and the network. It is thus possible to prevent new signaling from being added.

Note that the NAS message including the path information may be a NAS message which is additionally defined and used for transmitting the path information. In this case, it is possible to transmit the path information to the network node 300 without modifying the existing NAS message.

### (1-3) Reception of TA List

The UE 100 receives a message including a TA list from a network after the transmission of provided information. Specifically, the UE 100 (communication processing unit 135) receives the message including the TA list from the network as a response to path information serving as the provided information. The TA list is based on the path information.

For example, the UE 100 receives a NAS message including the TA list configured for the UE 100 from the AMF that is the network node 300 via the base station 200 as a response to a NAS message including the path information.

Such use of signaling between the UE and the network node allows the TA list to be transmitted from the network node 300 to the UE 100 without modifying the operation of a lower layer.

For example, the NAS message including the TA list may be a RegistrationAccept message that is a response to the RegistrationRequest message or a ServiceAccept message that is a response to the ServiceRequest message.

This makes it possible to receive the TA list from the network by using the exiting signaling and response mechanism between the UE and the network. It is thus possible to prevent new signaling from being added.

Note that the message including the TA list may be a message which is additionally defined and used for transmitting the TA list. In this case, it is possible to receive the TA list from the network without modifying any of the existing messages.

### (2) Operation of Base Station 200

The base station 200 transfers path information received from the UE 100 to the network node 300. In addition, the base station 200 transfers a TA list received from the network node 300 to the UE 100. The following describes an operation of the base station 200 and relevant information in detail. Note that the contents which are substantially the same as the description of an operation of the UE 100 will not be described in detail.

### (2-1) Transfer of Path Information

The base station 200 transfers path information received from the UE 100 to the network node 300. Specifically, the base station 200 (first communication processing unit 243) receives a message including path information serving as provided information from the UE 100. The base station 200 (second communication processing unit 245) transmits a message including the path information to the network node 300.

For example, the base station 200 (first communication processing unit 243) receives a NAS message including the path information serving as the provided information from the UE 100. The base station 200 (second communication processing unit 245) transmits the NAS message to the AMF that is the network node 300.

### (2-2) Transfer of TA List

The base station 200 transfers a TA list received from the network node 300 to the UE 100. Specifically, the base station 200 (second communication processing unit 245) receives a message including the TA list from the network node 300. The base station 200 (first communication processing unit 243) transmits a message including the TA list to the UE 100.

For example, the base station 200 (second communication processing unit 245) receives a NAS message including the TA list from the AMF that is the network node 300. The base station 200 (first communication processing unit 243) transmits the NAS message to the UE 100.

### (3) Operation of Network Node 300

The network node 300 receives path information from the UE 100. The network node 300 obtains a TA list based on the path information. The network node 300 transmits the TA list to the UE 100. The following describes an operation of the network node 300 and relevant information in detail. Note that the contents which are substantially the same as the description of an operation of the UE 100 or the base station 200 will not be described in detail.

### (3-1) Reception of Path Information

The network node 300 receives path information from the UE 100 via the base station 200. Specifically, the network node 300 (communication processing unit 335) receives a message including path information serving as provided information from the UE 100. The network node 300 (information obtaining unit 331) obtains the path information included in the message.

For example, the network node 300 receives a NAS message including the path information from the UE 100 via the base station 200. The network node 300 obtains the path information included in the received NAS message. For example, the network node 300 receives a RegistrationRequest message or a ServiceRequest message including the path information.

### (3-2) Obtainment of TA List

The network node 300 obtains a TA list based on path information. Specifically, the network node 300 (communication processing unit 335) transmits a message including the path information to a processing function that performs TA list conversion processing, and receives a message including the TA list from the processing function. The network node 300 (information obtaining unit 331) obtains the TA list included in the message received from the processing function. The processing function is, for example, the processing node 400.

For example, the network node 300 transmits a message that is received from the UE 100 and includes the path information to the processing node 400, and receives a message including the TA list obtained based on the path information from the processing node 400. Note that a protocol and a message which are used for communication between the network node 300 and the processing node 400 may be an existing protocol and message or may be newly defined.

In this way, the network node 300 obtains the TA list based on the path information by using the processing node 400. This makes it possible to reduce the calculation cost of the network node 300 as compared with the calculation cost for the network node 300 to compute a TA list from the path information. In addition, TA list conversion processing is performed by the processing node 400, which makes it possible to use more computational resources for the TA list conversion processing as compared with a case where TA list conversion processing is performed by the network node 300 such as the AMF that performs other various kinds of processing. This allows the accuracy of a computational result to be increased.

### (3-3) Transmission of TA List

The network node 300 transmits a TA list to the UE 100. Specifically, the network node 300 (communication processing unit 335) transmits a message including the obtained TA list to the UE 100.

For example, the network node 300 transmits a NAS message including the TA list to the UE 100 via the base station 200. For example, in a case where a received NAS message including the path information is a RegistrationRequest message, the network node 300 transmits a RegistrationAccept message including the TA list to the UE 100. In addition, in a case where the received NAS message including the path information is a ServiceRequest message, the network node 300 transmits a ServiceAccept message including the TA list to the UE 100.

### (4) Operation of Processing Node 400

The processing node 400 converts path information received from the network node 300 to a TA list. The processing node 400 transmits the converted TA list to the network node 300. The following describes an operation of the processing node 400 and relevant information in detail. Note that the contents which are substantially the same as the description of an operation of the network node 300 will not be described in detail.

### (4-1) Reception of Path Information

The processing node 400 receives path information from the network node 300. Specifically, the processing node 400 (communication processing unit 435) receives a message including the path information from the network node 300. The processing node 400 (information obtaining unit 431) obtains the path information included in the message.

### (4-2) TA List Conversion Processing

The processing node 400 obtains a TA list based on path information. Specifically, the processing node 400 (information obtaining unit 431) obtains a TA list through TA list conversion processing based on the path information. The processing node 400 performs the TA list conversion processing by using AI.

For example, the processing node 400 inputs the received path information to AI that performs TA list conversion processing, and obtains a TA list that is outputted from the AI. The AI is a computational model. Note that the AI may be trained through ML by using the path information. In this case, the AI is a trained ML model.

In this way, it is possible to expect reductions in the calculation cost and the calculation time of the TA list conversion processing by performing the TA list conversion processing with the AI. In addition, it is possible to expect reductions in the calculation cost and the calculation time and an increase in the accuracy of a result of the processing by training the AI through ML.

### (4-3) Transmission of TA List

The processing node 400 transmits a TA list to the network node 300. Specifically, the processing node 400 (communication processing unit 435) transmits a message including a TA list obtained through TA list conversion processing to the network node 300.

Note that the message including the TA list may be a response message to a message including path information received from the network node 300.

### (5) Flow of Processing

An example of processing according to the first embodiment of the present disclosure will be described with reference to FIG. 9.

The UE 100 transmits a NAS message including path information to the network node 300 via the base station 200 (S510). For example, the UE 100 transmits the NAS message including the path information to the base station 200. The base station 200 transfers the NAS message to the network node 300.

The network node 300 transmits a message including the path information to the processing node 400 (S520). For example, the network node 300 transmits the path information included in the NAS message received from the UE 100 to the processing node 400.

The processing node 400 transmits a message including a TA list to the network node 300 (S530). For example, the processing node 400 obtains the TA list by inputting the path information received from the network node 300 to AI (for example, machine learning model). The processing node 400 transmits a message including the obtained TA list to the network node 300.

The network node 300 transmits a message including the TA list to the UE 100 via the base station 200 (S540). For example, the network node 300 transmits a NAS message including the TA list included in the message received from the processing node 400 to the base station 200. The base station 200 transfers the NAS message to the UE 100.

### (6) Advantageous Effects

In this way, according to the first embodiment of the present disclosure, a message including provided information that is information which is used for configuring a TA list for the UE 100 and associated with a moving path of the UE 100 is transmitted from the UE 100 to a network. This allows the network side to configure a TA list for the UE 100 in which the moving path of the UE 100 is taken into consideration. Specifically, it is possible to decrease the possibility that the UE 100 moves to the outside of a TA indicated by the TA list. The TA list is therefore prevented from being updated. It is thus possible to suppress an increase in the signaling for updating the TA list. It is eventually possible to reduce the consumption of radio resources and power.

In addition, the provided information includes path information. This allows the network side that configures a TA list to generate a TA list suitable for the moving path. For example, the generation of a TA list by the network that is richer in computational resources than the UE 100 makes it possible to expect a decrease in the generation time and an increase in the accuracy of a result of the generation as compared with the generation of the TA list by the UE 100.

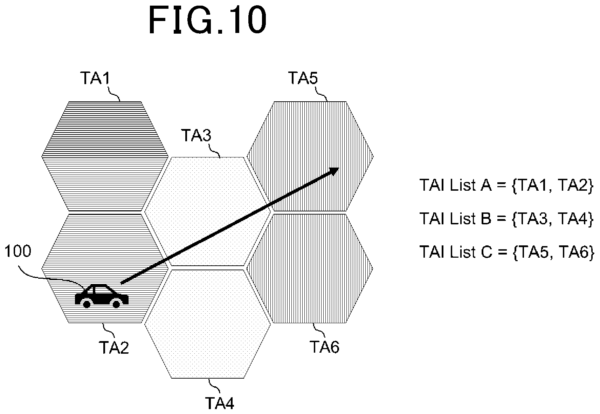

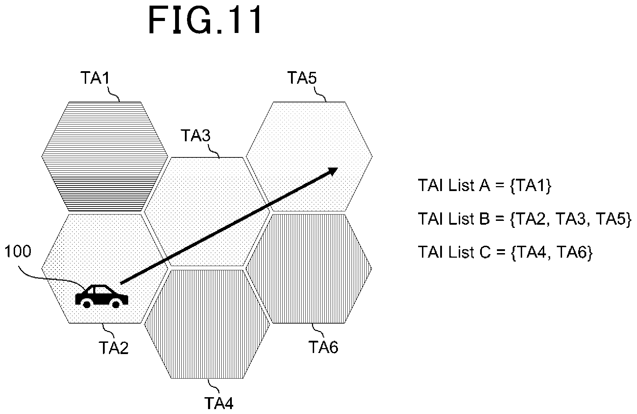

Further, the conventional technology and the first embodiment of the present disclosure will be compared with respect to the configuration of a TA list with reference to FIGS. 10 and 11 and the advantageous effects of the first embodiment of the present disclosure will be described.

First, the conventional TA list configuration will be described with reference to FIG. 10. A TA includes one or more cells and a TA list including a plurality of TAs is configured. For example, as illustrated in FIG. 10, TA1 to TA6 are configured, and TA list A including TA1 and TA2, TA list B including TA3 and T4, and TA list C including TA5 and TA6 are configured.

Conventionally, a moving path of the UE 100 has not been taken into consideration to configure a TA list. TA list A is thus configured for the UE 100 located within TA2. However, when the UE 100 moves along a path like the arrow illustrated in FIG. 10, the UE 100 moves from TA2 to TA3. TA2 and TA3 belong to different TA lists, invoking a TAU. Similarly, the movement from TA3 to TA5 also invokes a TAU. A TAU is invoked with high frequency. That is, the signaling for updating the TA list increases.

Next, the TA list configuration according to the first embodiment of the present disclosure will be described with reference to FIG. 11. For example, TA1 to TA6 are configured as in FIG. 10. However, in the first embodiment of the present disclosure, a moving path of the UE 100 is taken into consideration as illustrated in FIG. 11, thereby configuring TA list A including TA1, TA list B including TA2, TA3, and T5, and TA list C including TA4 and TA6.

TA list B is configured for the UE 100 located within TA2. Thus, even when the UE 100 moves along a path like the arrow illustrated in FIG. 11, the UE 100 passes through TA3 and T5 indicated by TA list B. In this way, the UE 100 does not move to any TA outside TA list B, invoking no TAU. According to the first embodiment of the present disclosure, it is thus possible to prevent a TAU from being invoked. That is, it is possible to suppress an increase in the signaling for updating the TA list.

### <6-2. Modification Examples>

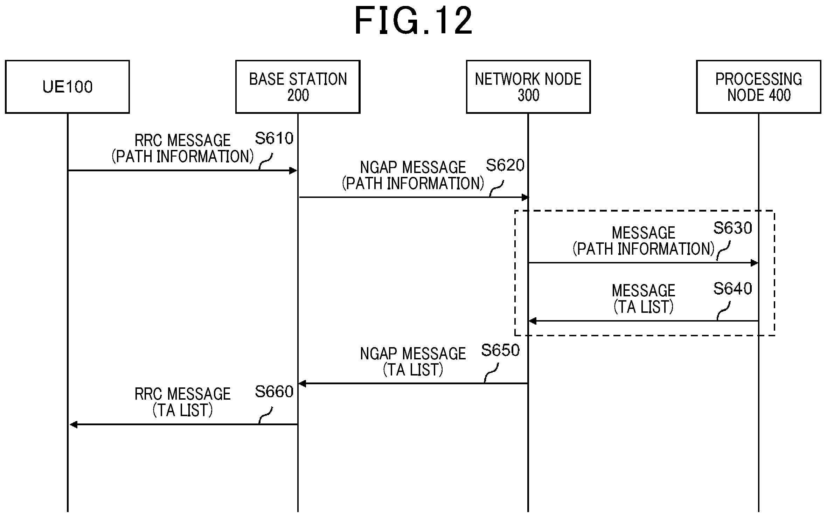

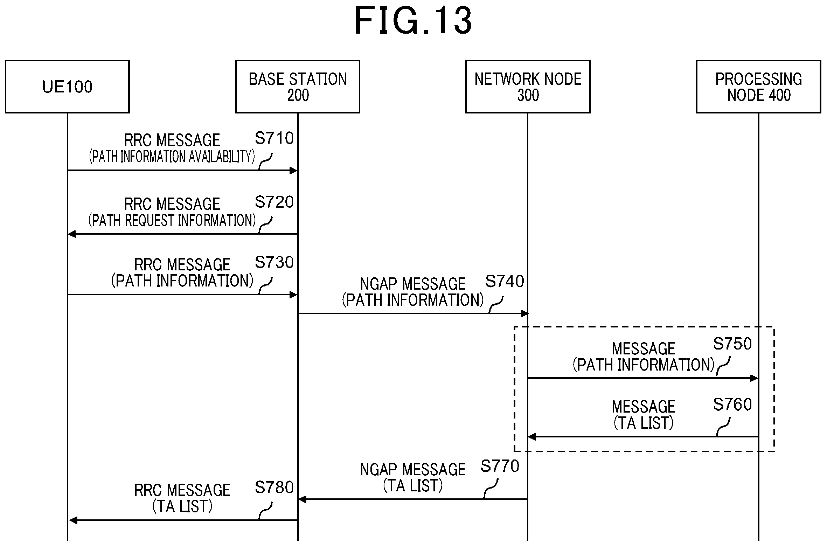

First to third modification examples according to the first embodiment of the present disclosure will be described with reference to FIGS. 12 and 13. Note that two or more of these modification examples may be combined.

### (1) First Modification Example: TA List Conversion by Network Node

In the first embodiment of the present disclosure described above, the processing node 400 performs TA list conversion processing. The subject of the TA conversion processing according to the first embodiment of the present disclosure is not, however, limited to this example.

As the first modification example of the first embodiment of the present disclosure, the network node 300 may perform TA list conversion processing.

Specifically, the network node 300 (control unit 333) performs TA list conversion processing based on path information. The network node 300 (information obtaining unit 331) obtains a TA list through the TA list conversion processing. For example, when the network node 300 obtains the path information from the UE 100, the network node 300 performs TA list conversion processing based on the path information. The TA list based on the path information is obtained through the TA list conversion processing. Note that AI held by the network node 300 may be used for the TA list conversion processing.

For example, the network node 300 performs TA list conversion processing instead of the processing in S520 and S530 surrounded by the dashed line illustrated in FIG. 9.

Note that the network node 300 may also perform TA list conversion processing in the second modification example described below. For example, the network node 300 may perform TA list conversion processing instead of the processing in S630 and S640, and S750 and S760 surrounded by the dashed lines illustrated in FIGS. 12 and 13.

In this way, according to the first modification example of the first embodiment of the present disclosure, it is possible for the network node 300 to obtain the TA list based on the path information without communicating with the processing node 400. It is thus possible to reduce signaling. That is, it is possible to reduce the consumption of communication resources and power for signaling.

### (2) Second Modification Example: Transmission of Path Information and TA List in RRC and NGAP

In the first embodiment of the present disclosure described above, the path information and the TA list are transmitted by using a NAS protocol. The communication protocol according to the first embodiment of the present disclosure used for transmitting the path information and the TA list is not, however, limited to this example.

As the second modification example of the first embodiment of the present disclosure, an RRC protocol and an NGAP may be used for transmitting the path information and the TA list.

### (2-1) Transmission of Path Information

Specifically, an RRC message including path information is transmitted from the UE 100 to the base station 200 in a RAN and an NGAP message including the path information is transmitted from the base station 200 to the network node 300.

For example, the UE 100 (communication processing unit 135) transmits an RRC message including the path information to the base station 200. The base station 200 (first communication processing unit 243) receives the RRC message from the UE 100. The base station 200 (information obtaining unit 241) obtains the path information from the RRC message. The base station 200 (second communication processing unit 245) transmits the NGAP message including the path information to the network node 300.

For example, the RRC message including the path information may be a UEInformationResponse message or a UEAssistanceInformation message.

This makes it possible to transmit path information serving as provided information from the UE 100 to the network node 300 by using the existing signaling between the UE and the base station and the existing signaling between the base station and the network node. It is thus possible to prevent new signaling from being added.

Note that the RRC message including the path information may be an RRC message which is additionally defined and used for transmitting the path information. In this case, it is possible to transmit the path information to the base station 200 without modifying an existing RRC message.

### (2-2) Transmission of TA List

In addition, an NGAP message including a TA list is transmitted from the network node 300 to the base station 200 and an RRC message including the TA list is transmitted from the base station 200 to the UE 100.

For example, the network node 300 (communication processing unit 335) transmits an NGAP message including the TA list to the base station 200. The base station 200 (second communication processing unit 245) receives the NGAP message from the network node 300. The base station 200 (information obtaining unit 241) obtains the TA list from the NGAP message. The base station 200 (first communication processing unit 243) transmits an RRC message including the TA list to the UE 100.

For example, the RRC message including the TA list may be an RRCReconfiguration message. In addition, in a case where available, the RRC message including the TA list may be an RRC message for RRCSetup, RRCReestablishment, RRCResume, or the like.

This makes it possible to transmit a TA list from the network node 300 to the UE 100 by using the existing signaling between the UE and the base station and the existing signaling between the base station and the network node. It is thus possible to prevent new signaling from being added.

### (2-3) Flow of Processing

An example of processing according to the second modification example of the first embodiment of the present disclosure will be described with reference to FIG. 12. Note that processing which is substantially the same as that of FIG. 9 will not be described.

The UE 100 transmits an RRC message including path information to the base station 200 (S610). For example, the UE 100 transmits a UEInformationResponse message or a UEAssistanceInformation message including the path information to the base station 200.

The base station 200 transmits an NGAP message including path information to the network node 300 (S620). For example, the base station 200 transmits an NGAP message including the path information received from the UE 100 to the network node 300.

The network node 300 transmits a message including the path information to the processing node 400 (S630). The processing node 400 transmits a message including a TA list to the network node 300 (S640).

The network node 300 transmits an NGAP message including the TA list to the base station 200 (S650). For example, the network node 300 transmits an NGAP message including the TA list received from the processing node 400 to the base station 200.

The base station 200 transmits an RCC message including the TA list to the UE 100 (S660). For example, the base station 200 transmits an RRCReconfiguration message including the TA list received from the network node 300 to the UE 100. Note that the TA list may be transmitted to the UE 100 at the timing of invoking a procedure such as RRCSetup, RRCReestablishment, or RRCResume by using a downlink RRC message corresponding to each of the procedures.

In addition, in a case where an RRC message including the path information is a UEInformationResponse message, the existing Flight Path mechanism in Release 15 may be used. An example of processing in a case where the existing Flight Path mechanism is used will be described with reference to FIG. 13. Note that processing which is substantially the same as that of FIGS. 9 and 12 will not be described.

The UE 100 transmits an RRC message including information indicating the availability of path information to the base station 200 (S710). For example, the UE 100 transmits an RRC message including flightPathInfoAvailable or information corresponding to this to the base station 200. For example, the RRC message may be an RRC message (for example, RRCSetupComp, RRCReestablishmentComp, RRCResumeComp, or RRCReconfigurationComp) serving as a response to an RRC message from the base station.

The base station 200 transmits an RRC message including path request information to the UE 100 (S720). For example, in a case where the received RRC message includes information indicating the availability of the path information, the base station 200 transmits a UEInformationRequest message including flightPathInfoReq or path request information corresponding to this to the UE 100.

The UE 100 transmits an RRC message including path information to the base station 200 (S730). For example, in a case where the received UEInformationRequest message includes the path request information, the UE 100 transmits a UEInformationResponse message including flightPathInfoReport or path information corresponding to this to the base station 200.

Note that the processing in S740 and subsequent steps is substantially the same as the processing in S620 and subsequent steps in FIG. 12 and will not be thus described.

In this way, according to the second modification example of the first embodiment of the present disclosure, even when no communication is directly established between the UE and the network node, it is possible to transmit path information serving as provided information from the UE 100 to the network node 300 or transmit a TA list from the network node 300 to the UE 100.

### (3) Third Modification Example: Transmission of Intermediate Information from Network Node to Processing Node

In the first embodiment of the present disclosure described above, the path information is transmitted from the network node 300 to the processing node 400. The information that is transmitted to the processing node 400 according to the first embodiment of the present disclosure is not, however, limited to this example.

As the third modification example of the first embodiment of the present disclosure, intermediate information (in other words, intermediate product) obtained by processing the path information may be transmitted from the network node 300 to the processing node 400.

Specifically, the network node 300 (control unit 333) performs part of TA list conversion processing based on path information. The network node 300 (information obtaining unit 331) obtains intermediate information through part of the TA list conversion processing. The network node 300 (communication processing unit 335) transmits a message including the intermediate information to the processing node 400.

In addition, the processing node 400 (communication processing unit 435) receives the message including the intermediate information from the network node 300. The processing node 400 (control unit 433) performs the rest of the TA list conversion processing based on the intermediate information. The processing node 400 (information obtaining unit 431) obtains a TA list through the rest of the TA list conversion processing. The processing node 400 (communication processing unit 435) transmits a message including the TA list to the network node 300.

For example, the intermediate information may be an output of AI that performs part of the TA list conversion processing. The AI may be part of AI that performs the TA list conversion processing. In addition, the AI may be transmitted from the processing node 400 or another node to the network node 300.

In this way, according to the third modification example of the first embodiment of the present disclosure, it is possible to reduce the calculation cost or the processing load of the processing node 400 by performing part of the TA list conversion processing in the network node 300. In other words, it is possible to distribute the calculation cost or the processing load of the processing between the network node 300 and the processing node 400.

Note that it may be selected whether or not to transmit the intermediate information to the processing node 400. Specifically, the network node 300 selects, in accordance with the status of the processing load of the processing node 400, whether to transmit the intermediate information or transmit the path information. For example, in a case where the processing node 400 has a heavy processing load, the network node 300 transmits the intermediate information. In a case where the processing node 400 does not have a heavy processing load, the network node 300 transmits the path information. In addition, it may be selected in accordance with the status of the processing load of the network node 300 whether to transmit the intermediate information or transmit the path information. For example, in a case where the network node 300 has a heavy processing load, the intermediate information is transmitted. In a case where the network node 300 does not have a heavy processing load, the path information is transmitted.

### <7. Second Embodiment>

Subsequently, a second embodiment of the present disclosure will be described. In the second embodiment, a TA list is transmitted from the UE 100 to the network node 300 via the base station 200 as provided information. In addition, the path information is provided from the UE 100 to the processing node 400 and the path information is converted to a TA list by the processing node 400.

### <7-1. Operation Examples>

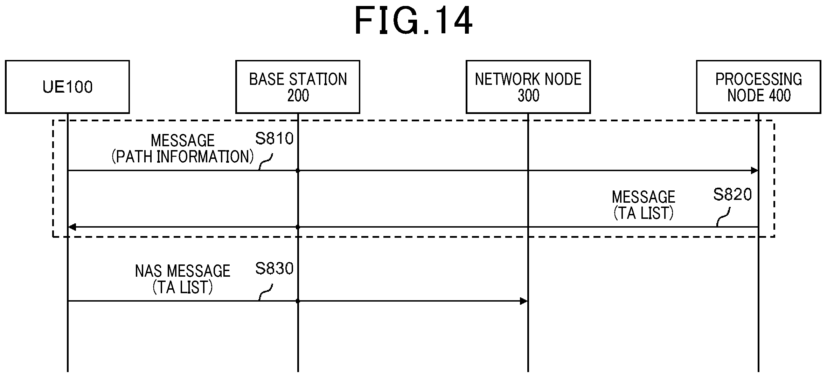

Examples of operations of the UE 100, the base station 200, the network node 300, and the processing node 400 according to the second embodiment of the present disclosure, and pieces of relevant information will be described with reference to FIG. 14. Note that the contents which are substantially the same as the description in the first embodiment will not be described in detail.

### (1) Operation of UE 100

The UE 100 transmits a TA list to the network node 300. The following describes an operation of the UE 100 and relevant information in detail.

### (1-1) Obtainment of TA List

The UE 100 obtains a TA list as provided information. Specifically, the UE 100 (information obtaining unit 131) obtains a TA list based on path information.

More specifically, when the path information is obtained, the UE 100 (communication processing unit 135) transmits a message including the path information to the processing node 400. The UE 100 (communication processing unit 135) receives a message including the TA list from the processing node 400.

For example, when the path information is obtained from a higher layer such as an application, the UE 100 transmits a message including the path information to the processing node 400. The UE 100 receives a message including the TA list based on the path information from the processing node 400. Note that a protocol and a message which are used for communication between the UE 100 and the processing node 400 may be an existing protocol and message or may be newly defined.

In this way, the UE 100 obtains the TA list based on the path information by using the processing node 400. This makes it possible to reduce the calculation cost of the UE 100 as compared with the calculation cost for the UE 100 to compute a TA list from the path information. In addition, it is possible to increase the accuracy of a computational result by performing TA list conversion processing in the processing node 400 as compared with a case where TA list conversion processing is performed in the UE 100 that is not rich in computational resources. In addition, it is possible to reduce the consumption of the power of the UE 100 that holds limited power.

### (1-2) Transmission of TA List

The UE 100 transmits a TA list to the network node 300. Specifically, the UE 100 (communication processing unit 135) transmits a message including a TA list serving as provided information to the network node 300.

For example, the UE 100 transmits a NAS message including a TA list based on the path information to the AMF that is the network node 300. The NAS message is transmitted to the network node 300 via the base station 200.

For example, the NAS message including the TA list may be a RegistrationRequest message or a ServiceRequest message.

Note that the NAS message including the TA list may be a NAS message which is additionally defined and used for transmitting the TA list. In this case, it is possible to transmit the TA list to the network node 300 without modifying the existing NAS message.

### (2) Operation of Base Station 200

The base station 200 transfers a TA list received from the UE 100 to the network node 300. The following describes an operation of the base station 200 and relevant information in detail. Note that the contents which are substantially the same as the description of an operation of the UE 100 will not be described in detail.

### (2-1) Transfer of TA List

The base station 200 transfers a TA list received from the UE 100 to the network node 300. Specifically, the base station 200 (first communication processing unit 243) receives a message including the TA list serving as provided information from the UE 100. The base station 200 (second communication processing unit 245) transmits a message including the TA list to the network node 300.

For example, the base station 200 (first communication processing unit 243) receives a NAS message including the TA list from the UE 100. The base station 200 (second communication processing unit 245) transmits the NAS message to the AMF that is the network node 300.

### (3) Operation of Network Node 300

The network node 300 receives a TA list from the UE 100 and configures the TA list. The following describes an operation of the network node 300 and relevant information in detail. Note that the contents which are substantially the same as the description of an operation of the UE 100 or the base station 200 will not be described in detail.

### (3-1) Reception of TA List

The network node 300 receives a TA list from the UE 100 via the base station 200. Specifically, the network node 300 (communication processing unit 335) receives a message including a TA list serving as provided information from the UE 100. The network node 300 (information obtaining unit 331) obtains the TA list included in the message.

For example, the network node 300 receives a NAS message including the TA list from the UE 100 via the base station 200. The network node 300 obtains the TA list included in the received NAS message. For example, the network node 300 receives a RegistrationRequest message or a ServiceRequest message including the TA list.

The network node 300 configures the received TA list for the UE 100. Note that, in a case where the TA list has been already configured for the UE 100, the configured TA list is updated with the received TA list.

### (4) Operation of Processing Node 400

The processing node 400 converts path information received from the UE 100 to a TA list. The processing node 400 transmits the TA list resulting from the conversion to the UE 100. The following describes an operation of the processing node 400 and relevant information in detail. Note that the contents which are substantially the same as the description of an operation of the UE 100 will not be described in detail.

### (4-1) Reception of Path Information

The processing node 400 receives path information from the UE 100. Specifically, the processing node 400 (communication processing unit 435) receives a message including the path information from the UE 100. The processing node 400 (information obtaining unit 431) obtains the path information included in the message.

### (4-2) TA List Conversion Processing

The processing node 400 obtains a TA list based on path information. Note that the TA list conversion processing is substantially the same as the processing according to the first embodiment and will not be thus described in detail.

### (4-3) Transmission of TA List

The processing node 400 transmits a TA list to the UE 100. Specifically, the processing node 400 (communication processing unit 435) transmits, to the UE 100, a message including a TA list obtained through TA list conversion processing.

Note that the message including the TA list may be a response message to a message including path information received from the UE 100.

### (5) Flow of Processing

An example of processing according to the second embodiment of the present disclosure will be described with reference to FIG. 14.

The UE 100 transmits a message including path information to the processing node 400 (S810). For example, the UE 100 transmits the message including the path information to the processing node 400 via the base station 200. Note that a message between the UE 100 and the base station 200 may be an RRC message.

The processing node 400 transmits a message including a TA list to the UE 100 (S820). For example, the processing node 400 obtains the TA list by inputting the path information received from the UE 100 to AI (for example, machine learning model). The processing node 400 transmits a message including the obtained TA list to the UE 100 via the base station 200.

The UE 100 transmits a message including the TA list to the network node 300 via the base station 200 (S830). For example, the UE 100 transmits a NAS message including the TA list included in the message received from the processing node 400 to the base station 200. The base station 200 transfers the NAS message to the network node 300.

### (6) Advantageous Effects

In this way, according to the second embodiment of the present disclosure, it is possible to suppress an increase in the signaling for updating a TA list as in the first embodiment. It is eventually possible to reduce the consumption of radio resources and power. Note that the advantageous effects as described with reference to FIG. 11 are attained as in the first embodiment.

In addition, the provided information includes the TA list based on the path information. This makes it possible to configure a TA list in which the moving path is taken into consideration without generating a TA list on the network side. That is, it is possible to configure a TA list suitable for the moving path while suppressing an increase in the processing load of the network node 300.

### <7-2. Modification Examples>

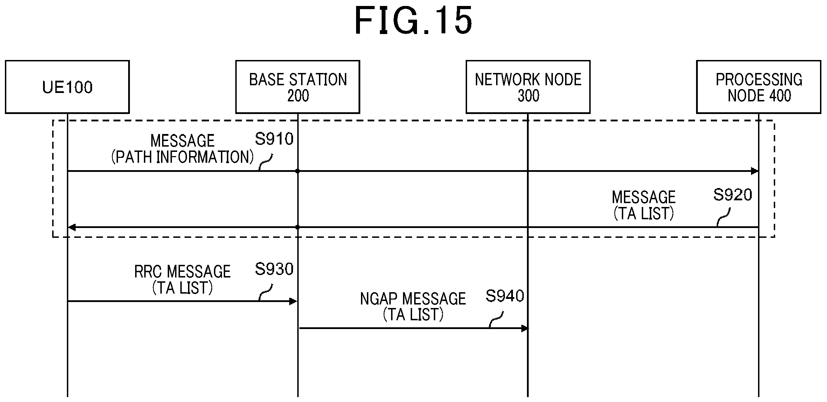

First to third modification examples according to the second embodiment of the present disclosure will be described with reference to FIG. 15. Note that two or more of these modification examples may be combined.

### (1) First Modification Example: TA List Conversion by UE

In the second embodiment of the present disclosure described above, the processing node 400 performs TA list conversion processing. The subject of the TA conversion processing according to the second embodiment of the present disclosure is not, however, limited to this example.

As the first modification example of the second embodiment of the present disclosure, the UE 100 may perform TA list conversion processing.

Specifically, the UE 100 (control unit 133) performs TA list conversion processing based on path information. The UE 100 (information obtaining unit 131) obtains a TA list through the TA list conversion processing. For example, when the UE 100 obtains the path information from a higher layer, the UE 100 performs TA list conversion processing based on the path information. The TA list based on the path information is obtained through the TA list conversion processing. Note that AI held by the UE 100 may be used for the TA list conversion processing.

For example, the UE 100 performs TA list conversion processing instead of the processing in S810 and S820 surrounded by the dashed line illustrated in FIG. 14.

Note that the UE 100 may also perform TA list conversion processing in the second modification example described below. For example, the UE 100 may perform TA list conversion processing instead of the processing in S910 and S920 surrounded by the dashed line illustrated in FIG. 15.

In this way, according to the first modification example of the second embodiment of the present disclosure, it is possible for the UE 100 to obtain the TA list based on the path information without communicating with the processing node 400. It is thus possible to reduce signaling. That is, it is possible to reduce the consumption of communication resources and power for signaling.

### (2) Second Modification Example: Transmission of TA List in RRC and NGAP

In the second embodiment of the present disclosure described above, the TA list is transmitted by using a NAS protocol. The communication protocol according to the second embodiment of the present disclosure used for transmitting the TA list is not, however, limited to this example.

As the second modification example of the second embodiment of the present disclosure, an RRC protocol and an NGAP may be used for transmitting the TA list.

### (2-1) Transmission of TA List

Specifically, an RRC message including a TA list is transmitted from the UE 100 to the base station 200 in a RAN and an NGAP message including the TA list is transmitted from the base station 200 to the network node 300.

For example, the UE 100 (communication processing unit 135) transmits an RRC message including the TA list to the base station 200. The base station 200 (first communication processing unit 243) receives the RRC message from the UE 100. The base station 200 (information obtaining unit 241) obtains the TA list from the RRC message. The base station 200 (second communication processing unit 245) transmits an NGAP message including the TA list to the network node 300.

For example, the RRC message including the TA list may be a UEInformationResponse message or a UEAssistanceInformation message.

Note that the RRC message including the TA list may be an RRC message which is additionally defined and used for transmitting the TA list. In this case, it is possible to transmit the TA list to the base station 200 without modifying an existing RRC message.

### (2-2) Flow of Processing

An example of processing according to the second modification example of the second embodiment of the present disclosure will be described with reference to FIG. 15. Note that processing which is substantially the same as that of FIG. 14 will not be described.

The UE 100 transmits a message including path information to the processing node 400 (S910). The processing node 400 transmits a message including a TA list to the UE 100 (S920).

The UE 100 transmits an RRC message including the TA list to the base station 200 (S930). For example, the UE 100 transmits a UEInformationResponse message or a UEAssistanceInformation message including the TA list to the base station 200.

The base station 200 transmits an NGAP message including the TA list to the network node 300 (S940). For example, the base station 200 transmits the NGAP message including the TA list received from the UE 100 to the network node 300.

In this way, according to the second modification example of the second embodiment of the present disclosure, even when no communication is directly established between the UE and the network node, it is possible to transmit a TA list serving as provided information from the UE 100 to the network node 300.

### (3) Third Modification Example: Transmission of Intermediate Information from UE to Processing Node

In the second embodiment of the present disclosure described above, the path information is transmitted from the UE 100 to the processing node 400. The information that is transmitted to the processing node 400 according to the second embodiment of the present disclosure is not, however, limited to this example.

As the third modification example of the second embodiment of the present disclosure, intermediate information obtained by processing the path information may be transmitted from the UE 100 to the processing node 400.

Specifically, the UE 100 (control unit 133) performs part of TA list conversion processing based on the path information. The UE 100 (information obtaining unit 131) obtains intermediate information through part of the TA list conversion processing. The UE 100 (communication processing unit 135) transmits a message including the intermediate information to the processing node 400.

In addition, the processing node 400 (communication processing unit 435) receives the message including the intermediate information from the UE 100. The processing node 400 (control unit 433) performs the rest of the TA list conversion processing based on the intermediate information. The processing node 400 (information obtaining unit 431) obtains a TA list through the rest of the TA list conversion processing. The processing node 400 (communication processing unit 435) transmits a message including the TA list to the UE 100.

For example, the intermediate information may be an output of AI that performs part of the TA list conversion processing. The AI may be part of AI that performs the TA list conversion processing. In addition, the AI may be transmitted from the processing node 400 or another node to the UE 100.

In this way, according to the third modification example of the second embodiment of the present disclosure, it is possible to reduce the calculation cost or the processing load of the processing node 400 by performing part of the TA conversion processing in the UE 100. In other words, it is possible to distribute the calculation cost or the processing load of the processing between the UE 100 and the processing node 400.

### <8. Third Embodiment>

A third embodiment of the present disclosure will be described. The provided information is transmitted from the UE 100 to the network node 300 via the base station 200 based on time information associated with permission to transmit the provided information. Note that the provided information and a message for transmitting the provided information are substantially the same as those of the first or second embodiment described above and will not be thus described in detail.

### <8-1. Operation Examples>

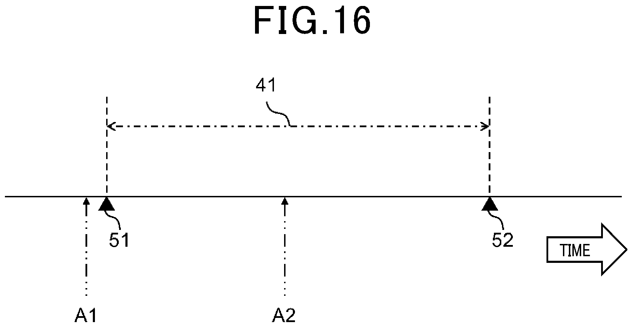

Examples of operations of the UE 100, the base station 200, the network node 300, and the processing node 400 according to the third embodiment of the present disclosure, and pieces of relevant information will be described with reference to FIGS. 16 to 18.

### (1) Time Information for Transmitting Provided Information

The provided information is transmitted based on time information associated with permission to transmit the provided information. Specifically, the time information indicates a time within which the transmission of the provided information is not permitted.

More specifically, the time information may indicate a transmission standby time for each piece of provided information. For example, as illustrated in FIG. 16, when provided information is transmitted at a time point 51, the transmission of provided information is not permitted before a transmission standby time 41 indicated by the time information passes. After the transmission standby time 41 passes, the next provided information is transmitted at a time point 52.

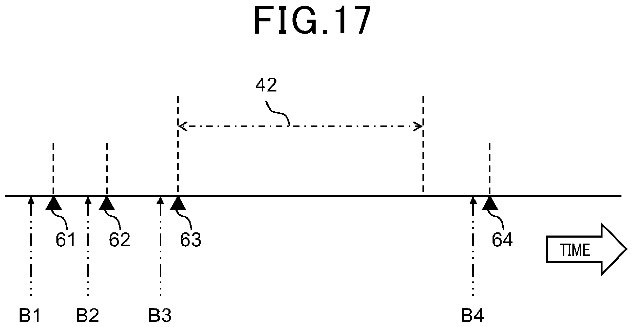

In addition, the time information may indicate transmission standby times for a plurality of piece of provided information. The number of plurality of pieces of provided information may be set by a network. For example, as illustrated in FIG. 17, pieces of provided information are transmitted at respective time points 61, 62, and 63. That is, provided information is transmitted three times. The transmission of provided information is not permitted before a transmission standby time 42 indicated by the time information passes from the time point 63 for the third transmission. After the transmission standby time 42 passes, the next provided information is transmitted at a time point 64. Note that any number of times provided information is transmitted is set. In addition, information indicating the number of times provided information is transmitted may be included in the time information or may be transmitted separately from the time information.

### (2) Notification of Time Information

The UE 100 is notified of the time information from a network. Specifically, the UE 100 (communication processing unit 135) receives a message including the time information from the network. The UE 100 (information obtaining unit 131) obtains the time information included in the message. More specifically, the UE 100 receives a NAS message including the time information from the network node 300 via the base station 200.

In addition, the network node 300 (information obtaining unit 331) obtains the time information. The network node 300 (communication processing unit 335) transmits a message including the time information to the UE 100. More specifically, the network node 300 transmits a NAS message including the time information to the UE 100 via the base station 200.

In addition, the base station 200 (second communication processing unit 245) receives a message including the time information from the network node 300. The base station 200 (first communication processing unit 243) transmits a message including the time information to the UE 100. More specifically, the base station 200 transfers a NAS message including the time information from the network node 300 to the UE 100.

Such use of NAS signaling between the UE and the network node allows the time information to be transmitted from the network node 300 to the UE 100 without modifying the operation of a lower layer.

The NAS message including the time information may be a response message to a message received from the UE 100. For example, the NAS message may be a RegistrationAccept message or a ServiceAccept message. In addition, the NAS message may be a message spontaneously transmitted from the network node 300. For example, the NAS message may be a ConfigurationUpdateCommand message.

This makes it possible to transmit the time information from the network node 300 to the UE 100 by using the exiting NAS signaling and response mechanism between the UE and the network node. It is thus possible to prevent new signaling from being added.

Note that the message including the time information may be a message which is additionally defined and used for transmitting the time information. In this case, it is possible to transmit the time information from the network to the UE 100 without modifying the existing message.

In addition, the time information may be requested from the network by the UE 100. Specifically, the UE 100 (communication processing unit 135) transmits, to the network, a message including request information that indicates the request of the time information and receives a message including the time information from the network as a response to the request information. The network node 300 (communication processing unit 335) transmits a message including the time information to the UE 100 as a response to the message that is received from the UE 100 and includes the request information.

For example, the message including the request information may be a NAS message. For example, the NAS message may be a RegistrationRequest message or a ServiceRequest message.

In this case, it is possible to notify the UE 100 of the time information from the network in accordance with the necessity of the time information for the UE 100. For example, it is possible to issue a notification of the time information in accordance with the presence or absence of the time information in the UE 100, the elapsed time after the time information is obtained the last time, or the like. This suppresses the unnecessary transmission of time information, thereby making it possible to reduce signaling.

### (3) Transmission of Provided Information Based on Time Information

The UE 100 transmits provided information based on time information. Specifically, the UE 100 (communication processing unit 135) transmits a message including provided information to the network based on the time information.

More specifically, the UE 100 transmits the message including the provided information to the network in accordance with a transmission standby time indicated by the time information. For example, referring to FIG. 16, the UE 100 transmits provided information at the time point 51 and sets a timer for the transmission standby time 41 when a transmission request A1 of the provided information is made. The UE 100 does not transmit the next provided information within the time of the timer even when a transmission request A2 of the provided information is made. At the time point 52 after the time of the timer passes, the UE 100 transmits the provided information for the transmission request A2.

In addition, referring to FIG. 17, the UE 100 transmits pieces of provided information at the respective time points 61, 62, and 63 when transmission requests B 1, B2, and B3 of the pieces of provided information are made. After the transmission of the provided information at the time point 63, the UE 100 sets a timer for the transmission standby time 42. The UE 100 does not transmit provided information within the time of the timer even when a transmission request is made. After the time of the timer passes, the UE 100 transmits provided information for a previously-made transmission request B4 at the time point 64 in accordance with the transmission request B4.

### (4) Flow of Processing

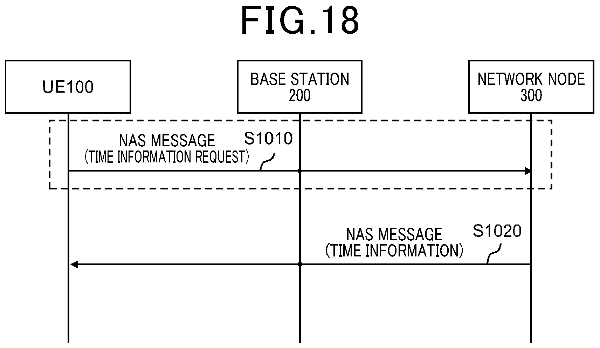

An example of processing according to the third embodiment of the present disclosure will be described with reference to FIG. 18.

The UE 100 transmits, to a network, a message including request information that indicates a request of time information (S1010). For example, the UE 100 transmits a NAS message including the request information to the network node 300 via the base station 200. Note that the processing in S1010 surrounded by the dashed line may be omitted.

The network node 300 transmits a message including the time information to the UE 100 (S1020). For example, the network node 300 transmits a NAS message including the time information to the UE 100 via the base station 200. In a case where the request information is received, the NAS message including the time information is transmitted as a response to the request information. From this time onward, the UE 100 will transmit provided information based on the received time information.

### (5) Advantageous Effects

Here, in a case where the provided information is transmitted to configure the TA list as in the first or second embodiment of the present disclosure, the advantageous effects of suppressing an increase in the signaling for configuring the TA list may be attained. Further, it is considered to be possible to increase the signaling suppressing effect by improving the number of times provided information is transmitted.

According to the third embodiment of the present disclosure, a message including time information associated with permission to transmit provided information is transmitted from a network to the UE 100. The message including the provided information is transmitted from the UE 100 to the network based on the time information. This allows the network (in other words, system 1) to control the number of times provided information is transmitted. The control over the number of times provided information is transmitted thus makes it possible to suppress an increase in signaling brought about by the transmission of provided information.

For example, in the first and second embodiments, the transmission of provided information causes a TA list to be updated in accordance with a path and the signaling of a TAU may be reduced. However, in a case where the path is changed with high frequency, a reduction in signaling brought about by updating the TA list in accordance with the path may be canceled by an increase in the signaling for transmitting provided information that is increased by changing the path with high frequency. In contrast, according to the third embodiment, it is possible to suppress an increase in the transmission of provided information even when a path is changed with high frequency. That is, it is possible to prevent the reduction in signaling brought about by updating the TA list in accordance with the path from being canceled by the increase in the signaling for transmitting provided information.

In addition, the time information indicates a time within which the transmission of provided information is not permitted. This makes it possible to secure a time within which provided information is not transmitted. It is thus possible to reliably suppress an increase in signaling.

In addition, the time information indicates transmission standby times for one or more pieces of provided information. Here, the transmission of provided information is highly likely to be in vain while a path is changed with high frequency. Each of the transmission standby times may therefore contribute to suppressing the transmission of provided information that may be in vain before the frequently-changing path stabilizes. In addition, the transmission standby times for a plurality of pieces of provided information make it possible to permit the transmission of provided information for part of the path change, while suppressing the transmission of the provided information for the rest of the path change. This makes it possible to suppress an increase in signaling while increasing transmission opportunities for provided information.

### <8-2. Modification Examples>

First and second modification examples according to the third embodiment of the present disclosure will be described. Note that two or more of these modification examples may be combined.

### (1) First Modification Example: Another Example of Time Information

In the third embodiment of the present disclosure described above, the time information indicates a time within which the transmission of provided information is not permitted. The time information according to the third embodiment of the present disclosure is not, however, limited to this example.

As the first modification example of the third embodiment of the present disclosure, time information may indicate a time within which the transmission of provided information is permitted.

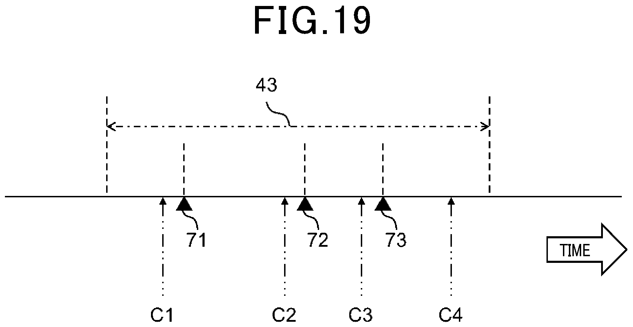

Specifically, the time information includes information indicating a time within which the transmission of provided information is permitted and information indicating the number of times provided information is transmitted within the time. For example, as illustrated in FIG. 19, provided information is transmitted within a time 43 serving as a transmission permission time indicated by the time information. Within the time 43, pieces of provided information corresponding to respective transmission requests C1, C2, and C3 are transmitted at time points 71, 72, and 73. The number of times provided information is transmitted within the time 43, however, reaches an upper limit (for example, three times). Provided information corresponding to a transmission request C4 is not thus transmitted within the time 43. The provided information corresponding to the transmission request C4 is transmitted within the next transmission permission time. Note that the information indicating the number of times provided information is transmitted may be transmitted separately from the time information. In addition, the number of times provided information is transmitted does not have to be set or the information indicating the number of times provided information is transmitted does not also have to be transmitted.

In this way, according to the first modification example of the third embodiment of the present disclosure, the time information indicates a time within which the transmission of provided information is permitted. This makes it possible to control a time within which provided information is transmitted. This makes it possible to suppress an increase in signaling while securing a transmission opportunity for provided information.

In addition, the time information includes number-of-times information indicating the number of times provided information is transmitted within a time within which the transmission of provided information is permitted. This makes it possible to control the number of times provided information is transmitted per predetermined time. The control over the number of times provided information is transmitted thus makes it possible to suppress signaling in more detail.

### (2) Second Modification Example: Notification of Time Information in RRC and NGAP

In the third embodiment of the present disclosure described above, a notification of the time information is issued by using a NAS message. The message used for a notification of the time information according to the third embodiment of the present disclosure is not, however, limited to this example.

As the second modification example of the third embodiment of the present disclosure, a notification of the time information may be issued by using an RRC message and an NGAP message.

Specifically, the UE 100 (communication processing unit 135) receives an RRC message including the time information from the base station 200. The base station 200 (second communication processing unit 245) receives an NGAP message including the time information from the network node 300. The base station 200 (first communication processing unit 243) transmits an RRC message including the time information to the UE 100. The network node 300 (communication processing unit 335) transmits an NGAP message including the time information to the base station 200.

For example, the RRC message including the time information may be an RRCReconfiguration message, an RRCSetup message, an RRCReestablishment message, or an RRCResume message.

This makes it possible to transmit the time information from the network node 300 to the UE 100 via the base station 200 by using the existing RAN signaling between the UE and the base station. It is thus possible to prevent new signaling from being added.

Note that the RRC message including the time information may be an RRC message which is additionally defined and used for transmitting the time information. In this case, it is possible to transmit the time information from the base station 200 to the UE 100 without modifying an existing RRC message.

In addition, the request information that has been described in the third embodiment and indicates a request of the time information may also be transmitted by using an RRC message and an NGAP message. Specifically, the UE 100 (communication processing unit 135) transmits an RRC message including the request information to the base station 200. The base station 200 (first communication processing unit 243) receives the RRC message including the request information. The base station 200 (second communication processing unit 245) transmits an NGAP message including the request information to the network node 300. The network node 300 (communication processing unit 335) receives the NGAP message including the request information from the base station 200.

For example, the RRC message including the request information may be an RRCSetupRequest message, an RRCReestablishmentRequest message, or an RRCResumeRequest message.

In this way, according to the second modification example of the third embodiment of the present disclosure, even when no communication is directly established between the UE and the network node, it is possible to transmit time information from the network node 300 to the UE 100.

While embodiments of the present disclosure have been described above, the present disclosure is not limited to the embodiments. It will be understood by those skilled in the art that the embodiments are merely examples and various changes can be made without departing from the scope and the spirit of the present disclosure.

For example, steps in processing described in the present specification do not necessarily have to be performed chronologically in the order described in the flowchart or the sequence diagram. For example, steps in processing may be performed in an order different from the order described as the flowchart or the sequence diagram or may be performed in parallel. In addition, some of steps in processing may be removed or a further step may be added to the processing.

For example, there may be provided a method including the operations of one or more components of the apparatus described in the present specification or there may be provided a program for causing a computer to perform the operations of the components. Moreover, there may be provided a non-transitory tangible computer-readable storage medium having stored therein the program. Naturally, such a method, program, and non-transitory tangible computer-readable storage medium are also included in the present disclosure.

For example, in the present disclosure, a user equipment (UE) may be referred to by another name such as mobile station, mobile terminal, mobile apparatus, mobile unit, subscriber station, subscriber terminal, subscriber apparatus, subscriber unit, wireless station, wireless terminal, wireless apparatus, wireless unit, remote station, remote terminal, remote apparatus, or remote unit.

For example, in the present disclosure, "transmit" may mean performing processing of at least one layer in a protocol stack used for transmission or physically transmitting a signal wirelessly or by wire. Alternatively, "transmit" may mean a combination of performing the processing of the at least one layer and physically transmitting a signal wirelessly or by wire. Similarly, "receive" may mean performing processing of at least one layer in a protocol stack used for reception or physically receiving a signal wirelessly or by wire. Alternatively, "receive" may mean a combination of performing the processing of the at least one layer and physically receiving a signal wirelessly or by wire. The at least one layer may be replaced with at least one protocol.

For example, in the present disclosure, "obtain/acquire" may mean obtaining/acquiring information from stored information, obtaining/acquiring information from information received from another node, or obtaining/acquiring information by generating the information.

For example, in the present disclosure, "include" and "comprise" do not mean that listed items alone are included, but mean that listed items alone may be included or a further item may be included in addition to the listed items.

For example, in the present disclosure, "or" does not mean exclusive OR, but means inclusive OR.

Note that the technical features included in the embodiments may be represented as the following features. Naturally, the present disclosure is not limited to the following features.

### (Feature 1)

A communication apparatus (100) comprising:
a communication processing unit (135) configured to receive, from a network (200, 300), a message including time information associated with permission to transmit provided information that is used for configuring a tracking area, TA, list for the communication apparatus; and
an information obtaining unit (131) configured to obtain the time information included in the message, wherein
the provided information is associated with a moving path of the communication apparatus.

### (Feature 2)

The communication apparatus according to Feature 1, wherein
the time information indicates a time (41, 42) within which transmission of the provided information is not permitted.

### (Feature 3)

The communication apparatus according to Feature 2, wherein
the time information indicates transmission standby times (41, 42) for one or more pieces of the provided information.

### (Feature 4)

The communication apparatus according to Feature 1, wherein
the time information indicates a time (43) within which transmission of the provided information is permitted.

### (Feature 5)

The communication apparatus according to Feature 4, wherein
the time information includes number-of-times information indicating a number of times the provided information is transmitted within the time within which the transmission of the provided information is permitted.

### (Feature 6)

The communication apparatus according to any one of Features 1 to 5, wherein
the network includes a network node (300) within a core network, and
the message including the time information includes a non-access stratum, NAS, message

### (Feature 7)

The communication apparatus according to Feature 6, wherein
the NAS message is a RegistrationAccept message, a ServiceAccept message, or a ConfigurationUpdateCommand message.

### (Feature 8)

The communication apparatus according to any one of Features 1 to 7, wherein
the network includes a base station (200) in a radio access network, and
the message including the time information includes a radio resource control, RRC, message

### (Feature 9)

The communication apparatus according to Feature 8, wherein
the RRC message is an RRCReconfiguration message, an RRCSetup message, an RRCReestablishment message, or an RRCResume message.

### (Feature 10)

The communication apparatus according to any one of Features 1 to 9, wherein
the communication processing unit is configured to transmit, to the network, a message including request information indicating a request of the time information, and
the communication processing unit is configured to receive, from the network, the message including the time information as a response to the request information.

### (Feature 11)

The communication apparatus according to any one of Features 1 to 10, wherein
the communication processing unit is configured to transmit, to the network, a message including the provided information based on the time information.

### (Feature 12)

The communication apparatus according to any one of Features 1 to 11, wherein
the provided information includes path information indicating at least the moving path of the communication apparatus.

### (Feature 13)

The communication apparatus according to any one of Features 1 to 12, wherein
the provided information includes the TA list based on path information indicating at least the moving path of the communication apparatus.

### (Feature 14)

The communication apparatus according to any one of Features 11 to 13, wherein
the network includes a network node (300) within a core network, and
a message including the provided information includes a non-access stratum, NAS, message.

### (Feature 15)

The communication apparatus according to Feature 14, wherein
the NAS message is a RegistrationRequest message or a ServiceRequest message.

### (Feature 16)

The communication apparatus according to any one of Features 11 to 15, wherein
the network includes a base station (200) in a radio access network, and
a message including the provided information includes a radio resource control, RRC, message.

### (Feature 17)

The communication apparatus according to Feature 16, wherein
the RRC message is a UEInformationResponse message or a UEAssistanceInformation message.

### (Feature 18)

A network node (300) comprising:
an information obtaining unit (331) configured to obtain time information associated with permission to transmit provided information that is used for configuring a tracking area, TA, list for a communication apparatus (100); and
a communication processing unit (335) configured to transmit, to the communication apparatus, a message including the time information, wherein
the provided information is associated with a moving path of the communication apparatus.

### (Feature 19)

A base station (200) comprising:
a second communication processing unit (245) configured to receive, from a network node (300), a message including time information associated with permission to transmit provided information that is used for configuring a tracking area, TA, list for a communication apparatus (100); and
a first communication processing unit (243) configured to transmit, to the communication apparatus, the message including the time information, wherein
the provided information is associated with a moving path of the communication apparatus.

### (Feature 20)

A method performed by a communication apparatus (100), comprising:
receiving, from a network (200, 300), a message including time information associated with permission to transmit provided information that is used for configuring a tracking area, TA, list for the communication apparatus; and
obtaining the time information included in the message, wherein
the provided information is associated with a moving path of the communication apparatus.

### (Feature 21)

A method performed by a network node (300), comprising:
obtaining time information associated with permission to transmit provided information that is used for configuring a tracking area, TA, list for a communication apparatus (100); and
transmitting, to the communication apparatus, a message including the time information, wherein
the provided information is associated with a moving path of the communication apparatus.

### (Feature 22)

A method performed by a base station (200), comprising:
receiving, from a network node (300), a message including time information associated with permission to transmit provided information that is used for configuring a tracking area, TA, list for a communication apparatus (100); and
transmitting, to the communication apparatus, the message including the time information, wherein
the provided information is associated with a moving path of the communication apparatus.

### (Feature 23)

A program for causing a computer to execute operations of:
receiving, from a network (200, 300), a message including time information associated with permission to transmit provided information that is used for configuring a tracking area, TA, list for a communication apparatus (100); and
obtaining the time information included in the message, wherein
the provided information is associated with a moving path of the communication apparatus.

### (Feature 24)

A program for causing a computer to execute operations of:
obtaining time information associated with permission to transmit provided information that is used for configuring a tracking area, TA, list for a communication apparatus (100); and
transmitting, to the communication apparatus, a message including the time information, wherein
the provided information is associated with a moving path of the communication apparatus.

### (Feature 25)

A program for causing a computer to execute operations of:
receiving, from a network node (300), a message including time information associated with permission to transmit provided information that is used for configuring a tracking area, TA, list for a communication apparatus (100); and
transmitting, to the communication apparatus, the message including the time information, wherein
the provided information is associated with a moving path of the communication apparatus.

### (Feature 26)

A non-transitory tangible computer-readable storage medium having stored therein a program for causing a computer to execute operations of:
receiving, from a network (200, 300), a message including time information associated with permission to transmit provided information that is used for configuring a tracking area, TA, list for a communication apparatus (100); and
obtaining the time information included in the message, wherein
the provided information is associated with a moving path of the communication apparatus.

### (Feature 27)

A non-transitory tangible computer-readable storage medium having stored therein a program for causing a computer to execute operations of:
obtaining time information associated with permission to transmit provided information that is used for configuring a tracking area, TA, list for a communication apparatus (100); and
transmitting, to the communication apparatus, a message including the time information, wherein
the provided information is associated with a moving path of the communication apparatus.

### (Feature 28)

A non-transitory tangible computer-readable storage medium having stored therein a program for causing a computer to execute operations of:
receiving, from a network node (300), a message including time information associated with permission to transmit provided information that is used for configuring a tracking area, TA, list for a communication apparatus (100); and
transmitting, to the communication apparatus, the message including the time information, wherein
the provided information is associated with a moving path of the communication apparatus.

## Claims

1. An apparatus (100) comprising:
a communication processing unit (135) configured to receive, from a network (200, 300), a message including time information associated with permission to transmit provided information that is used for configuring a tracking area, TA, list for the apparatus; and
an information obtaining unit (131) configured to obtain the time information included in the message, wherein
the provided information is associated with a moving path of the apparatus.

2. The apparatus according to claim 1, wherein
the time information indicates a time (41, 42) within which transmission of the provided information is not permitted.

3. The apparatus according to claim 2, wherein
the time information indicates transmission standby times (41, 42) for one or more pieces of the provided information.

4. The apparatus according to claim 1, wherein
the time information indicates a time (43) within which transmission of the provided information is permitted.

5. The apparatus according to claim 4, wherein
the time information includes number-of-times information indicating a number of times the provided information is transmitted within the time within which the transmission of the provided information is permitted.

6. The apparatus according to any one of claims 1 to 5, wherein
the network includes a network node (300) within a core network, and
the message including the time information includes a non-access stratum, NAS, message.

7. The apparatus according to any one of claims 1 to 6, wherein
the network includes a base station (200) in a radio access network, and
the message including the time information includes a radio resource control, RRC, message.

8. The apparatus according to any one of claims 1 to 7, wherein
the communication processing unit is configured to transmit, to the network, a message including request information indicating a request of the time information, and
the communication processing unit is configured to receive, from the network, the message including the time information as a response to the request information.

9. The apparatus according to any one of claims 1 to 8, wherein
the communication processing unit is configured to transmit, to the network, a message including the provided information based on the time information.

10. The apparatus according to any one of claims 1 to 9, wherein
the provided information includes path information indicating at least the moving path of the apparatus.

11. The apparatus according to any one of claims 1 to 10, wherein
the provided information includes the TA list based on path information indicating at least the moving path of the apparatus.

12. An apparatus (300) comprising:
an information obtaining unit (331) configured to obtain time information associated with permission to transmit provided information that is used for configuring a tracking area, TA, list for a communication apparatus (100); and
a communication processing unit (335) configured to transmit, to the communication apparatus, a message including the time information, wherein
the provided information is associated with a moving path of the communication apparatus.

13. A method performed by an apparatus (100), comprising:
receiving, from a network (200, 300), a message including time information associated with permission to transmit provided information that is used for configuring a tracking area, TA, list for the apparatus; and
obtaining the time information included in the message, wherein
the provided information is associated with a moving path of the apparatus.

14. A method performed by an apparatus (300), comprising:
obtaining time information associated with permission to transmit provided information that is used for configuring a tracking area, TA, list for a communication apparatus (100); and
transmitting, to the communication apparatus, a message including the time information, wherein
the provided information is associated with a moving path of the communication apparatus.
